Europäisches Patentamt

European Patent Office

Office européen des brevets

(19)

(11) EP 0 960 752 A2

(12) EUROPÄISCHE PATENTANMELDUNG

(43) Veröffentlichungstag:
01.12.1999  Patentblatt 1999/48

(51) Int. Cl.⁶: B60G 17/015

(21) Anmeldenummer: 99108555.6

(22) Anmeldetag: 05.05.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 22.05.1998 DE 19823093

(71) Anmelder: DaimlerChrysler AG
70567 Stuttgart (DE)

(72) Erfinder:
• Wetzel, Guido
West Bloomfield/Michigan 48322 (US)
• Steiner, Peter, Dr.
86629 Schrobenhausen (DE)
• Bischoff, Michael
85111 Adelschlag (DE)

(74) Vertreter: Kolb, Georg et al
DaimlerChrysler AG,
Postfach 35 35
74025 Heilbronn (DE)

(54) Verfahren und Vorrichtung zur Bestimmung von schwingungs- und fahrzeugspezifischen Grössen eines Fahrzeuges während der Fahrt und deren Verwendung

(57)     Bei bisherigen Verfahren und Vorrichtungen wird die Drehrate um die Längsachse bestimmt. Mit dieser wird ein Umkippen oder Überschlagen eines Kraftfahrzeuges erfaßt. Die Höhe der Drehrate bestimmt, ob eine Sicherheitsvorrichtung aktiviert wird oder nicht.

Bei dem erfindungsgemäßen Verfahren bzw. Vorrichtung wird der zeitliche Verlauf der Eigenschwingung, also die Eigenfrequenz bzw. die Periodendauer mittels Drehratensensor und Zeitmesser ermittelt.

Diese Verfahren und Vorrichtungen eignen sich zur Massebestimmung von Kraftfahrzeugen, insbesondere Lastkraftwagen, während der Fahrt und zur Berechnung der Umkippwahrscheinlichkeit, so daß rechtzeitig Maßnahmen zum Verhindern des Umkippens ergriffen werden können.

FIG.1

EP 0 960 752 A2

## Beschreibung

**Die Erfindung betrifft** ein Verfahren und Vorrichtungen zur Bestimmung von schwingungs- und fahrzeugspezifischen Größen eines Fahrzeugs während der Fahrt und deren Verwendung.

Es sind verschiedene Vorrichtungen bekannt, die den Neigungs- bzw. den Kippwinkel eines Kraftfahrzeuges bestimmen.

Beispielsweise ist in der DE 42 17 247 A1 ein Überwachungssystem für die Neigung von Fahrzeugen offenbart, welches das Umkippen eines Fahrzeuges durch eine ungleichmäßige Belastung der Ladefläche verhindert. Ein Meßfühler ermittelt die Längs- und Querneigung des Fahrzeuges gegenüber der Lotrechten. Die Meßwerte werden in einer elektronischen Schaltung weiterverarbeitet und die Neigung des Fahrzeuges in Größe und Richtung mittels einer Anzeigeeinheit dargestellt. Zusätzlich kann die Meßeinheit zur Bestimmung von Beschleunigungskräften, insbesondere von Querbeschleunigungen, die für die Fahrtstabilität mit entscheidend sind, eingesetzt werden. Der Meßfühler wirkt hierbei als Fliehkraftpendel.

**Nachteilig** hierbei ist jedoch, daß mit einem Pendel nicht die Kippneigung bestimmt werden kann. Das Pendel mißt das Scheinlot, wobei das Scheinlot wiederum z.B. von einer Kurvenfahrt beeinflußt wird.

Auch sind verschiedene Vorrichtungen, insbesondere Drehratensensor, Gierratensensor, bekannt, die eine Winkelgeschwindigkeit, insbesondere die Drehgeschwindigkeit um die Längsachse des Fahrzeugs erfassen. Sie werden als Überrollsensoren eingesetzt, die bei Erreichen eines Maximalwertes ein Sicherheitssystem, insbesondere einen Überrollbügel oder einen Airbag aktivieren. Hier sei die DE 195 00 800 A1 aufgeführt, die einen Coriolis-Drehratensensor, mit einem federnd an einem Substrat aufgehängten, aufgrund einer Beschleunigungseinwirkung auslenkbaren, seismischen Masse, sowie Auswertemitteln zum Erfassen einer Coriolisbeschleunigung offenbart.

**Nachteilig** bei diesen Systemen ist es, daß nur die Winkelgeschwindigkeit, also die Drehgeschwindigkeiten um die Kippachse erfaßt wird. Bei Überschreiten eines kritischen Wertes erfolgt die Auslösung eines Sicherheitssytems. Der Fahrer wird nicht rechtzeitig auf die Umkippgefahr hingewiesen. Er kann mit einem solchen System dem Umkippen nicht aktiv entgegenwirken oder auf einen gefährlichen Beladungszustand hingewiesen werden.

Auch können mit derartigen Systemen keine Massebestimmungen durchgeführt werden.

**Der Erfindung liegt daher die Aufgabe zugrunde**, ein Verfahren und Vorrichtungen zur Bestimmung von schwingungs- und fahrzeugspezifischen Größen aufzuzeigen, die die bisherigen Nachteile vermeiden.

**Diese Aufgabe wird erfindungsgemäß durch die Merkmale im Patentanspruch 1 gelöst**.

Hierbei wird der zeitliche Verlauf der Eigenschwingung, insbesondere die Eigenfrequenz oder Periodendauer, eines fahrenden Fahrzeuges gemessen. Dadurch können schwingungs- und fahrzeugspezifische Größen, wie die Masse des Fahrzeugs oder dessen Kippneigung eindeutig berechnet werden und eine Umkippgefährdung zuverlässig abgeschätzt werden. Der zeitliche Verlauf der Eigenschwingung wird dadurch bestimmt, indem über einen Sensor mindestens zwei absolute oder relative Amplitudenwerte erfaßt werden und die dazwischenliegende Zeitspanne mit einem Zeitmesser gemessen wird und in eine Auswerteeinheit der zeitliche Verlauf der Eigenschwingung berechnet wird.

**Die mit der Erfindung erzielten Vorteile** bestehen darin, daß bei bekanntem Verlauf der Eigenschwingung des Fahrzeuges wesentlich mehr Aussagen, im Vergleich zur Messung eines Einzelzustandes, über bestimmte Parameter z.B. die Masse gemacht werden können und das weitere Verhalten des Fahrzeuges abgeschätzt werden kann. Bei der Messung von zeitlichen Größen wie Frequenz und Periodendauer lassen sich zukünftige Werte zumindest näherungsweise vorberechnen. Bei einer reinen Amplitudenmessung ist dies nicht der Fall.

**Weitere vorteilhafte Weiterbildungen** ergeben sich aus den Unteransprüchen. Hier wird mit Hilfe des zeitlichen Verlaufs der Eigenschwingung die Masse des Kraftfahrzeuges während der Fahrt bestimmt. Auch kann rechtzeitig vorhergesagt werden, ob ein Fahrzeug umkippgefährdet ist oder nicht. Das heißt es bleibt noch genügend Zeit um Gegenmaßnahmen zu ergreifen, die ein Umkippen verhindern.

Im folgenden soll die Erfindung anhand von **Ausführungsbeispielen** in Zusammenhang mit den Zeichnungen dargestellt werden.

**Figur 1**:   Seitenansicht auf einen LKW

**Figur 2**:   Darstellung der Schwingung um die Längsachse

**Figur 3**:   Schwingungsdiagramm eines Kraftfahrzeugs

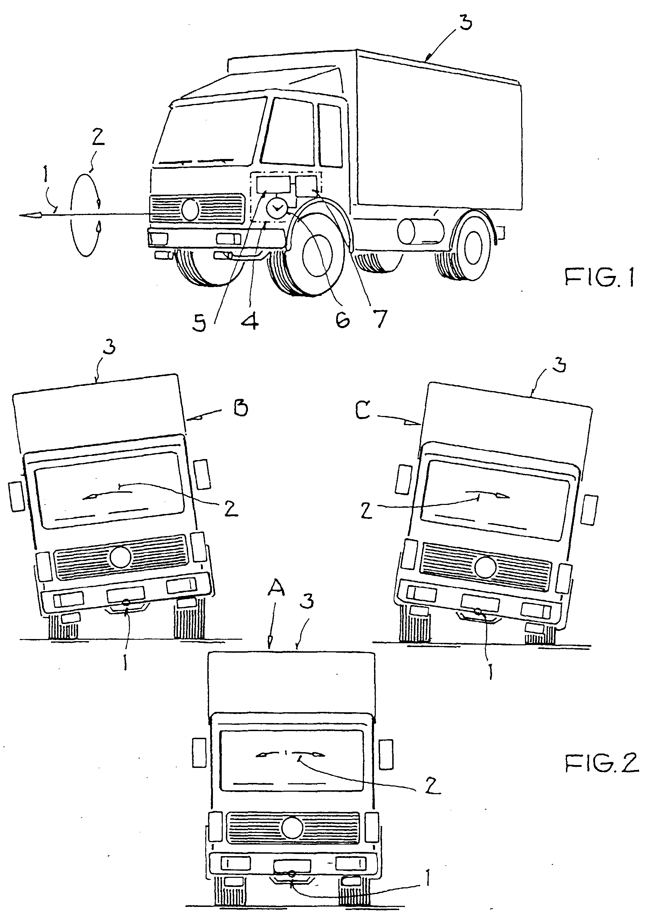

**Figur 1** zeigt einen Lastkraftwagen **3** in der Seitenansicht. In dieser Abbildung ist die Längsachse **1** des Lkws eingezeichnet. Beim Fahren des Lkws **3** erfolgt um diese Längsachse **1** eine Eigenschwingung, welche in der Abbildung durch Pfeile **2** dargestellt ist. Die Frequenz der Eigenschwingung, die Eigenfrequenz $f_n$, ist abhängig von der Torsionsfedersteifigkeit $D_T$ der Fahrwerksfeder und von den Reifen und vom Trägheitsmoment. Sie ist unabhängig von den Stoßdämpfern und vom Zustand der Straße. Diese Eigenschwingung ist charakteristisch für jedes Fahrzeug. Die Eigenfrequenz $f_n$ wird auch als Neigungsfrequenz bezeichnet und die Geschwindigkeit mit der die Schwingung vonstatten geht, wird als Neigungsgeschwindigkeit bezeichnet. Ist die Neigungsgeschwindigkeit bekannt oder ist sogar im voraus berechenbar, so kann damit, wie später beschrieben, eine Aussage über die Umkippwahrscheinlichkeit getroffen werden.

Die Eigenfrequenz ist auch abhängig vom Trägheitsmoment **I** des Fahrzeugs.

Es gilt:

$$f_n \cong \sqrt{\frac{D_T}{I}}$$

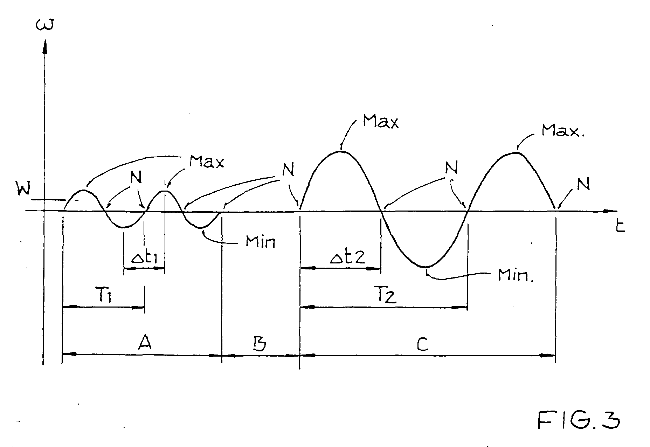

Dieses Flächenträgheitsmoment **I** wird bestimmt durch die Masse **m** und die Lage des Schwerpunkts. Dies gilt aber nur unter der Voraussetzung, daß der Schwerpunkt unabhängig vom Beladungszustand gleich bleibt. Hier bestehen bei Lkws Beladungsvorschriften, die dazu dienen, diese Grundvoraussetzung zu gewährleisten. Dadurch wird verhindert, daß wegen einer ungünstigen Beladung eine höhere Masse vorgetäuscht wird und die Kippwahrscheinlichkeit ansteigt. In diesem Fahrzeug befindet sich eine Vorrichtung **4** zur Bestimmung des zeitlichen Verlaufs der Eigenschwingung des Lkws. Darin ist ein herkömmlicher Überrollsensor **5**, wie er beispielsweise in Cabriolets eingesetzt wird, um beim Überschlagen einen Überrollbügel zu aktivieren, enthalten. Derartige Überrollsensoren **5** erfassen immer einen Ausschlag, insbesondere eine Geschwindigkeit, also immer nur einen momentanen Wert, der sich bei einer Schwingung ständig verändert, weil er vom Amplitudenwert abhängig ist. Des weiteren beinhaltet die Vorrichtung **4** einen Zeitmesser **6** und eine Auswerteeinheit **7**, mit denen die Periodendauer, die Frequenz oder andere Größen, die den zeitlichen Verlauf der Eigenschwingung charakterisieren, ermittelt werden. Der Zeitmesser **6** mißt die Zeit zwischen zwei Ereignissen, die vom Überrollsensor **5** detektiert werden. Hierbei ist es gleichgültig, ob der Nulldurchgang der Schwingung um die Längsachse **1**, der maximale Ausschlag, ein Vorzeichenwechsel oder andere beliebige Werte vom Überrollsensor **5** erfaßt werden. Wichtig hierbei ist nur, daß bekannt ist, um welchen Bruchteil oder welches Vielfache einer Periodendauer zwischen den beiden Punkten liegt. Wird beispielsweise die Zeit zwischen zwei Nullpunktsdurchgängen oder zwischen zwei Vorzeichenwechsel gemessen, dann entspricht dies der halben Periodendauer. Wird aber beispielsweise die Zeit zwischen zwei Maxima oder zwei Minima gemessen, so entspricht die Zeit einer vollen Periodendauer. Dieser Sachverhalt ist ausführlich in Figur 3 dargestellt. Aus den laufend ermittelten Werten kann der voraussichtliche Verlauf der Eigenschwingung in der Auswerteeinheit vorausberechnet werden. Dadurch können Aussagen über die Umkippwahrscheinlichkeit rechtzeitig prognostiziert werden. Dem Fahrer bleibt so genügend Zeit dem bevorstehenden Umkippen des Fahrzeugs entgegenzuwirken. Aus der ermittelten Eigenfrequenz **f**$_n$ oder einem anderen dazu proportionalen Wert (Periodendauer, etc.) und der bekannten Torsionsfedersteifigkeit kann auch während der Fahrt die Masse **m** des Fahrzeugs berechnet werden.

Es gilt:

$$f_n \cong \sqrt{\frac{D_T}{I}} \text{ und } I \cong m$$

Die modernen Sensoren wie z.B. Gierratensensor und Rollratensensor sind sehr genau und können auch kleine Bewegungen messen. Die Eigenfrequenz ist unabhängig von der äußeren Anregung und kann damit schon bei kleinen Schwingungen im normalen Fahrbetrieb zur Bestimmung der Masse herangezogen werden. Da die Eigenfrequenz eine eingeprägte Größe darstellt und nur über die Masse variiert werden kann, ist eine Bestimmung bei kleinster Anregung bereits möglich.

Mit diesem Verfahren läßt sich auch der zeitliche Verlauf der Eigenschwingung an Anhängern oder gekoppelten Systemen ermitteln.

So wird zum Beispiel bei einem Sattelzug der Sensor besser am Auflieger angebracht sein als an der Zugmaschine, da die Zugmaschine immer wieder den Auflieger wechselt.

Der Sensor ist immer auf den Aufbau des Fahrzeugs abzustimmen, das heißt, wenn es zwei unterschiedliche Lkws gibt, so muß auch der Sensor angepaßt werden.

**Figur 2** zeigt die Schwingung um die Längsachse in der Frontalansicht. Der Ausschlag **2** der Schwingung ist aus darstellerischen Gründen übertrieben dargestellt. Mit dem Auge ist die Eigenschwingung des Fahrzeuges **3** in der Regel nicht sichtbar. Der Drehratensensor jedoch erfaßt auch kleinste Ausschläge bzw. die Winkelgeschwindigkeit der Bewegung sehr genau, so daß die Eigenfrequenz **f**$_n$ mit einem Zeitmesser in einer Auswerteeinheit, wie in Figur 1 dargestellt, ermittelt werden kann.

**Figur 3** zeigt den zeitlichen Verlauf der Schwingung um die Längsachse **1**. Das hier abgebildete Diagramm zeigt den kompletten Schwingungsverlauf, bei der jedem Zeitpunkt ein Amplitudenwert zugeordnet ist. Jedoch muß nicht jedes Wertepaar (Zeit/Amplitude) einzeln ausgemessen werden. Es ist ausreichend, nur wenige markante Punkte auszumessen.

Hierbei ist es gleichgültig, ob der Nulldurchgang der Schwingung um die Längsachse **1**, der maximale Ausschlag **Min**, **Max**, ein Vorzeichenwechsel **N** oder andere beliebige Werte **W** vom Überrollsensor **5** erfaßt werden. Wichtig ist nur, daß bekannt ist, um welchen Bruchteil oder welches Vielfache einer Periodendauer zwischen den beiden Punkten liegt. Wird beispielsweise die Zeit zwischen zwei Nullpunktsdurchgängen **N** gemessen, dann entspricht dies der halben Periodendauer. Wird aber beispielsweise die Zeit zwischen zwei Maxima **Max** oder zwei Minima **Min** gemessen, so entspricht die Zeit einer vollen Periodendauer.

Der Drehratensensor ermittelt dabei die Winkelgeschwindigkeit ω. Die ermittelte Winkelgeschwindigkeit ω dient als Amplitudenwert der Schwingung. Hat die Winkelgeschwindigkeit ω den Wert 0, so befindet sich das Fahrzeug entweder am äußersten Ausschlag des Schwingungszustandes und die Bewegung wird umgekehrt oder aber das System ruht. Im ersten Fall wird die Zeit zwischen beiden Ereignissen mit $\Delta t_1$ gemessen. Die Zeit $\Delta t_1$ entspricht einer halben Periodendauer $T_1$. Der Kehrwert der Periodendauer $T_1$ ist die gesuchte Eigenfrequenz $f_1$. Aus der Eigenfrequenz kann dann, wie bereits vorher beschrieben, das Trägheitsmoment und daraus die Masse $m_1$ berechnet werden. Winkelgeschwindigkeit und Amplitudenwert sind umgekehrt proportional zueinander. Während der Dauer **A** ist der Verlauf der Eigenschwingung vorausberechenbar. Während der Dauer **B** steht das Kraftfahrzeug. Es ist kein Ausschlag vorhanden. In der Darstellung ist das Ausschwingen nicht dargestellt. Die Schwingung wird nicht abrupt abgebrochen, sondern schwingt in der Regel langsam aus. Auch dieser Vorgang wird, obwohl nicht abgebildet, bei einer intelligenten Auswerteeinheit vom System erkannt. Während der Zeitdauer **C** ist erkennbar, daß sich die Periodendauer $T_2$ und damit auch die Eigenfrequenz $f_2$ gegenüber dem Zeitabschnitt **A** verändert hat. Unter der Annahme, daß die Torsionsfedersteifigkeit $D_T$ konstant bleibt, kann davon ausgegangen werden, daß die Änderung durch ein anderes Trägheitsmoment **I** verursacht wird. Eine Änderung des Trägheitsmoments tritt wiederum dann ein, wenn sich die Masse oder der Schwerpunkt verändert. Werden die Beladungsvorschriften eingehalten, so ist sichergestellt, daß sich der Schwerpunkt nicht verändert. Dies ist die Voraussetzung, daß die Masse exakt bestimmt werden kann. Die veränderte Frequenz $f_2$ während der Zeit **C** wird durch eine höhere Zuladung verursacht. Werden die Beladungsvorschriften eingehalten und der Schwerpunkt nicht verändert, dann kann bei bekannter Torsionsfedersteifigkeit die Masse $m_2$ des Fahrzeugs während der Fahrt bestimmt werden. Die Eigenschwingung ist nicht abhängig von den Straßenverhältnissen. Durch die längere Periodendauer $T_2$ während der Zeit **C** wird auch deutlich, daß die Umkippgefährdung ansteigt, die Schwingung dauert länger und legt somit auch längere Wege zurück bzw. die Amplitude vergrößert sich. Hierbei ist es nicht nötig die maximale Amplitude zu kennen oder zu messen. Auch während der Zeit **C** wurde weder der Einschwingvorgang noch der Ausschwingvorgang mitberücksichtigt. Sie kann aber mit einer intelligenten Auswerteeinheit erfaßt und bei den Berechnungen mitberücksichtigt werden. Das Einschwingverhalten und Ausschwingverhalten dient auch zur Berechnung einer zukünftigen Umkippgefährdung und kann vom Auswertesystem hierfür genutzt werden.

In der in Figur 1 beschriebenen Auswerteeinheit können derartige Kurven ganz oder teilweise abgespeichert sein. Für jedes Fahrzeug mit einer ganz bestimmten Masse bzw. einem bekannten Trägheitsmoment ist die Anzahl der möglichen Kurven, die sich insbesondere durch ein bestimmtes Verhältnis zwischen Frequenz und Amplitude auszeichnen, begrenzt. Übersteigt die Amplitude einen bestimmten Wert, bzw. unterschreitet die Frequenz einen bestimmten Wert, so kippt das Fahrzeug.

**Patentansprüche**

1. Verfahren zur Bestimmung von schwingungs- und fahrzeugspezifischen Größen, insbesondere das Trägheitsmoment (I) in Längsrichtung, die Masse (m) und die Kippneigung eines Fahrzeuges, indem der zeitliche Verlauf der Eigenschwingung, insbesondere die Eigenfrequenz ($f_n$) bzw. Periodendauer ($T_n$), um die Längsachse (1) des Fahrzeuges während der Fahrt ermittelt wird.

2. Vorrichtung (4) zur Durchführung des Verfahrens nach Anspruch 1,

   - die einen Sensor (5) beinhaltet, der zumindest einen absoluten oder relativen Amplitudenwert, insbesondere den Nullpunkt, den Maximalwert bzw. den Minimalwert oder einen Vorzeichenwechsel erfaßt,
   - einen Zeitmesser (6), der die Zeit zwischen zwei, insbesondere gleichen Amplitudenwerten mißt und
   - eine Auswerteeinheit (7), mit der dann der zeitliche Verlauf der Eigenschwingung berechnet wird.

3. Verfahren nach Anspruch 1, bei dem zumindest zwei festgelegte absolute oder relative Amplitudenwerte, insbesondere der Nullpunkt (N) bzw. der Vorzeichenwechsel, der Maximalwert (Max) bzw. der Minimalwert (Min), erfaßt werden und die Zeit zwischen zwei, insbesondere gleichen, Amplitudenwerten (ω) gemessen und daraus der zeitliche Verlauf berechnet wird.

4. Vorrichtung (4) nach Anspruch 2, wobei der Sensor (5), der den absoluten oder relativen Amplitudenwert oder den Vorzeichenwechsel erfaßt, zumindest einen Drehratensensor, insbesondere einen Gierratensensor oder Rollratensensor, beinhaltet.

5. Verwendung der Vorrichtung (4) gemäß Anspruch 2, zur Bestimmung der Masse (m) des Fahrzeuges, insbesondere eines Lastkraftwagens, während der Fahrt, wobei die Masse aus dem zeitlichen Verlauf der Schwingung, insbesondere aus der Eigenfrequenz ($f_n$) oder der Periodendauer ($T_n$) und der Torsionsfedersteifigkeit des Fahrzeuges berechnet wird.

6. Verwendung der Vorrichtung (4) gemäß dem Anspruch 2, zur Messung der Kippgefährdung eines Fahrzeuges, insbesondere eines Lastkraftwagens, indem über den zeitlichen Verlauf der Schwingung, insbesondere über die Höhe der Eigenfrequenz ($f_n$) bzw. der Periodendauer ($T_n$) die Umkippgefährdung berechnet oder abgeschätzt wird, so daß dem Fahrer genügend Zeit verbleibt, dem Umkippen entgegenzuwirken.

FIG.1

FIG.2

FIG.3